# EUROPÄISCHE PATENTSCHRIFT

(11) **EP 0 846 835 B1**
(45) Veröffentlichungstag und Bekanntmachung des Hinweises auf die Patenterteilung: **27.10.2004**
(21) Anmeldenummer: 97810911.4
(22) Anmeldetag: 26.11.1997
(51) Int. Cl.: E21B 10/44, E21B 10/58

(54) **Beton- oder Gesteinbohrwerkzeug mit wendelförmigen Abfuhrnuten**
Concrete- or rock drill bit with helical evacuation grooves
Trépan de forage du béton ou de la roche avec rainures d'évacuation hélicoidales

(30) Priorität: 05.12.1996 DE 19650487
(43) Veröffentlichungstag der Anmeldung: 10.06.1998
(73) Patentinhaber: HILTI Aktiengesellschaft, 9494 Schaan (LI)
(72) Erfinder: Bongers-Ambrosius, Hans-Werner, 81477 München (DE); Sartor, Dietmar, 9493 Mauren (LI); Batliner, Rainer, 9486 Schaanwald (LI); Geiger, Harald, 82110 Germering (DE); Knoller, Anton, 86899 Landsberg (DE)
(74) Vertreter: Wildi, Roland

(56) Entgegenhaltungen:
- EP-A- 0 361 189
- DE-A- 2 735 227

## Beschreibung

Die Erfindung betrifft ein Bohrwerkzeug gemäss dem Oberbegriff des Patentanspruchs 1.

Es ist bekannt, dass zur Herstellung von Bohrungen in einem harten Untergrund wie Beton, Gestein oder Mauerwerk ein Bohrwerkzeug, wie es beispielsweise aus der DE-OS 27 35 227 bekannt ist, verwendet wird, bei dem-in einer Ausnehmung des Bohrkopfes eine Schneidplatte aus Hartmetall eingesetzt ist. Die Schneidplatte dieses Bohrwerkzeuges weist einen im wesentlichen senkrecht zur Längserstreckung des Bohrwerkzeuges erstreckenden, rechteckförmigen Querschnitt auf und überragt mit ihrer senkrecht zur Längserstreckung des Bohrwerkzeuges verlaufenden Breite den Bohrkopf auf zwei einander gegenüberliegenden Seiten radial. Die Länge der Schneidplatte erstreckt sich parallel zur Längserstreckung des Bohrwerkzeuges. Ein bohrrichtungsseitiger Endbereich der Schneidplatte überragt den Bohrkopf in Bohrrichtung und das bohrrichtungsseitige Ende der Schneidplatte ist als Schneidspitze ausgebildet. Entgegen der Bohrrichtung schliesst sich an den Bohrkopf ein Schaft an, der eine wendelförmige Abfuhmut aufweist, die dem Abtransport von Bohrklein aus der Bohrung dient.

Im Vergleich zum Durchmesser ist die senkrecht zur Breite und senkrecht zur Längserstreckung des Bohrwerkzeuges gemessene Stärke der Schneidplatte sehr gering. Während eines Bohrvorganges treten im radialen Endbereich der Schneidplatte sehr hohe Belastungen auf, die einerseits durch eine hohe Umfangsgeschwindigkeit, andererseits bei der Spanabnahme durch hohe auf die Schneidplatte einwirkende Kräfte hervorgerufen werden. Der radiale Endbereich der Schneidplatte unterliegt somit einem höheren Verschleiss als der zentrale Bereich der Schneidplatte. Aufgrund der hohen Belastungen können aber auch Beschädigungen an der Schneidplatte auftreten.

Der Erfindung liegt die Aufgabe zugrunde, ein Bohrwerkzeug zu schaffen, das sich unter Vermeidung von Beschädigungen der Schneidplatte durch eine hohe Standzeit auszeichnet.

Erfindungsgemäss wird die Aufgabe durch ein Bohrwerkzeug gelöst, weiches die im kennzeichnenden Abschnitt des Patentanspruchs 1 angeführten Merkmale aufweist.

Aufgrund der erfindungsgemässen Ausgestaltung wird der Schneidplatte vor allem in den radialen Endbereichen eine höhere Festigkeit verliehen, die zu einer höheren Standzeit der Schneidplatte führt. Mit entlang des Durchmessers zunehmendem Drehmoment steht mehr Material zur Verfügung. Aus der Sicht der Festigkeitsbetrachtung entsteht ein optimales Profil mit hohem Trägheitsmoment.

Damit die beim Bohrvorgang auf die Schneidplatte wirkenden Kräfte gleichmässig auf die gesamte Breite der Schneidplatte verteilt werden können, erstrecken sich zweckmässigerweise die Verstärkungen im wesentlichen über die halbe Breite der Schneidplatte.

Die von der Schneidplatte bzw. dem Bohrwerkzeug aufzunehmenden Kräfte setzen sich zusammen aus Schneidkräften die im wesentlichen auf den bohrrichtungsseitigen Endbereich der Schneidplatte wirken und Reibkräften, die an den radialen freien Enden der Schneidplatte auftreten. Eine gleichmässige Verteilung der Reibkräfte über die im wesentlichen gesamte Länge der Schneidplatte wird mittels Verstärkungen erreicht, die sich vorzugsweise wenigstens teilweise im wesentlichen über die gesamte Länge der Schneidplatte erstrecken.

Eine gute Abfuhr des von der Schneidplatte abgetragenen Bohrkleins in Richtung Abfuhmuten wird vorzugsweise mit einer Schneidplatte erreicht, deren Länge im Bereich der Verstärkungen mit zunehmender, in Umfangsrichtung gemessener Stärke abnimmt. Die in Bohrrichtung weisende Fläche der Verstärkungen ist somit in Richtung Abfuhmuten geneigt ausgebildet.

Sehr hohe Festigkeit und eine massive Ausbildung der Schneidplatte im radialen Endbereich wird erreicht, indem zweckmässigerweise das in Umfangsrichtung gemessene Mass der Verstärkung zur Aussenkontur hin zunimmt.

Die für das Herstellen von genauen kreisrunden Bohrungen notwendige Rundiaufgenauigkeit des Bohrwerkzeuges wird erreicht indem vorteilhafterweise die in Umfangsrichtung weisende, freie Fläche der Verstärkung in einer Ebene verläuft, die im wesentlichen durch das Zentrum des Bohrwerkzeuges verläuft. Beide Verstärkungen sind dadurch beispielsweise gleich gross ausgebildet, haben die gleiche Masse und weisen die gleichen Rotationsschwerpunkte auf.

Bei der Herstellung von Bohrungen in Untergründen, die aus unterschiedlichen Materialien bestehen, ist es notwendig, das Bohrwerkzeug mit unterschiedlichen Drehzahlen rotieren zu lassen. Insbesondere bei sehr hohen Drehzahlen wirken sehr hohe, Fliehkräfte auf die Schneidplatte. Mit Hilfe der erfindungsgemässen Schneidplatte, bei der vorzugsweise der Winkel zwischen der in Umfangsrichtung weisenden, freien Fläche und der Breitenerstreckung der Schneidplatte 20° bis 60° beträgt, wird eine Festlegung der Schneidplatte in radialer Richtung in der Ausnehmung des Bohrkopfes erreicht.

Das während eines Bohrvorganges anfallende Bohrklein kann zumindest teilweise zwischen die Verstärkungen der Schneidplatte und die Bohrlochwand gelangen, wo es eine erhöhte Reibung des Bohrwerkzeuges in der Bohrung bewirkt. Diese Reibung wird verhindert, indem vorteilhafterweise der Durchmesser der von den Verstärkungen gebildeten Hüllkurve kleiner ist als die Breite der Schneidplatte. Dadurch wird ein sich zwischen der Bohrlochwand und den Verstärkungen ausbreitender Zwischenraum geschaffen, indem sich das Bohrklein frei und ungehindert in Richtung Abfuhmuten bewegen kann.

Zweckmässigerweise ist im Bereich der Verstärkungen an den freien radialen Enden der Schneidplatte eine parallel zur Längserstreckung des Bohrwerkzeuges verlaufende Vertiefung angeordnet, die das Abführen des Bohrkleins, das sich zwischen der Schneidplatte bzw. dem Bohrkopf und der Bohrlochwand befindet, zusätzlich beschleunigt.

Die Erfindung wird anhand von Zeichnungen, die ein Ausführungsbeispiel wiedergeben näher erläutert. Es zeigen:
- Fig. 1: ein erfindungsgemässes Bohrwerkzeug mit Einsteckende, Schaft, Bohrkopf und Schneidplatte;
- Fig.2: eine vergrösserte Darstellung der Ansicht A auf das Bohrwerkzeug gemäss Fig. 1;
- Fig. 3: eine vergrösserte Seitenansicht der in dem Bohrkopf des Bohrwerkzeugs gemäss Fig. 1 eingesetzten Schneidplatte;
- Fig. 4: eine vergrösserte Draufsicht auf die Scheidplatte gemäss Fig. 3.

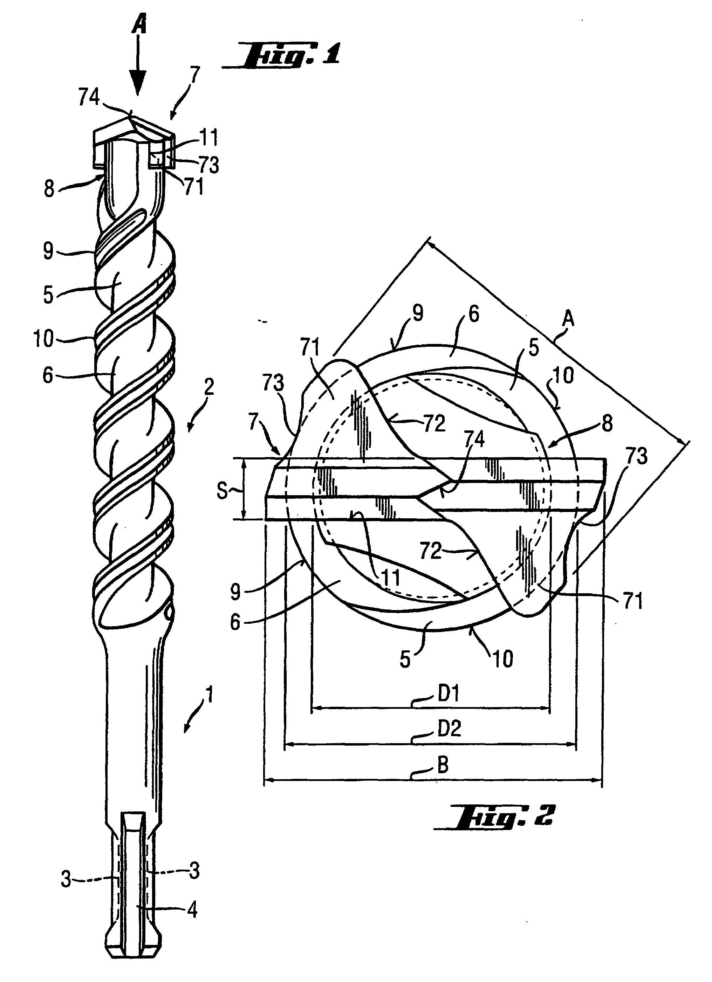

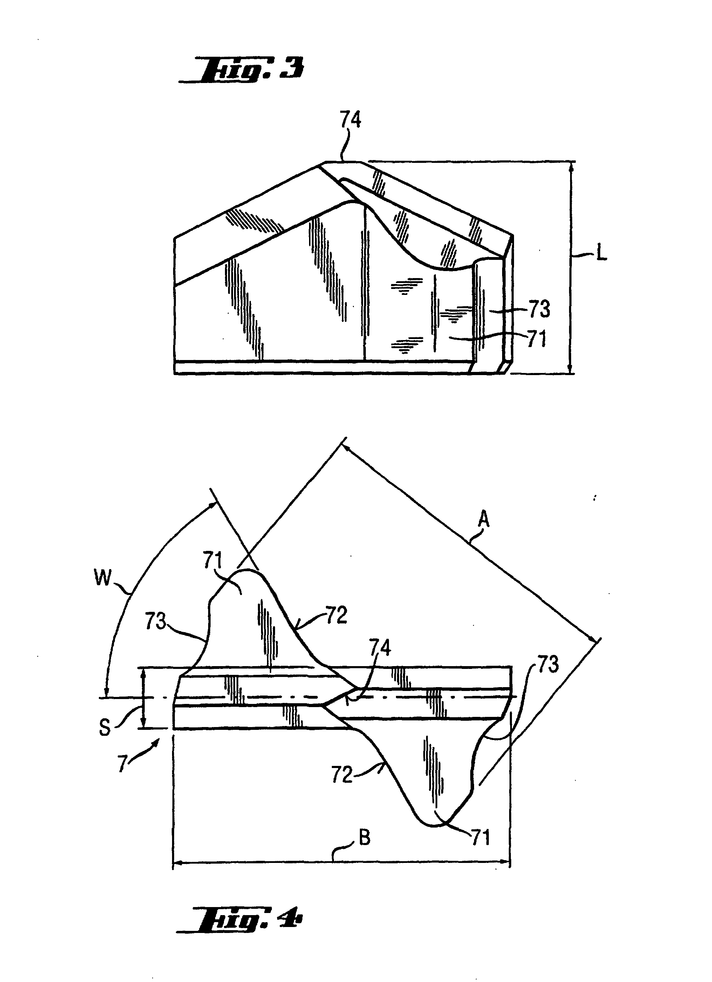

Das in den Fig. 1 und 2 dargestellte Bohrwerkzeug weist ein Einsteckende 1, einen Schaft 2 einen Bohrkopf 8 und eine Schneidplatte 7 auf. In dem vom Schaft 2 abgewandten Endbereich des Einsteckendes 1 sind zwei einander diametral gegenüberliegende Verriegelungsnuten 3 und zwei einander diametral gegenübertiegende Drehmitnahmenuten 4 angeordnet, wobei die Drehmitnahmenuten 4 gegenüber den Verriegelungsnuten 3 um 90° versetzt angeordnet sind. Eine der Drehmitnahmenuten 4 ist nicht sichtbar. Sowohl die Drehmitnahmenuten 4 als auch die Verriegelungsnuten 3 haben einen im wesentlichen rechteckigen Querschnitt und erstrecken sich parallel zur Längserstreckung des Bohrwerkzeuges.

Direkt an das Einsteckende 1 schliesst sich in Bohrrichtung ein Schaft 2 an, dessen Durchmesser D2 grösser ist als der Aussendurchmesser des Einsteckendes 1. Der Schaft 2 setzt sich zusammen aus zwei wendelförmig verlaufenden Abfuhmuten 5, 6, die durch zwei Wendel 9, 10 voneinander getrennt sind.

Bohrrichtungsseitig schliesst sich an den Schaft 2 ein Bohrkopf 8 an, dessen Durchmesser D1 kleiner ist als der Durchmesser D2 des Schaftes 2. Die Abfuhmuten 5,6 laufen parallel zur Längserstreckung des Bohrwerkzeuges auf zwei einander im wesentlichen gegenüberliegenden Seiten zum freien Ende des Bohrkopfes 8 hin aus. Zwischen beiden Abfuhmuten 5, 6 weist der Bohrkopf 8 eine zum freien Ende hin offene Ausnehmung 11 auf, die der Aufnahme einer in den Fig. 2 bis 4 vergrössert dargestellten Schneidplatte 7 mit der Stärke S dient. Die senkrecht zur Längserstreckung des Bohrwerkzeuges verlaufene Breite B der Schneidplatte 7 übersteigt den Durchmesser D2 des Schaftes 2. Die Festlegung der Schneidplatte 7 in der Ausnehmung 11 des Bohrkopfes 8 kann mittels eines Lotes erfolgen. Möglich sind auch Schweissverfahren, wie beispielsweise Laserschweissen.

Die Schneidplatte 6 weist eine Schneidspitze 74 auf, die das freie Ende des Bohrkopfes 8 in Bohrrichtung axial überragt. An beiden radialen Endbereichen weist die Schneidplatte 7 Verstärkungen 71 auf, die sich entgegen dem wendelförmigen Auslauf der Abfuhmuten 5, 6 erstrecken. Die Verstärkungen 71 erstrecken sich im wesentlichen über die halbe Breite B der Schneidplatte 7 und das in Umfangsrichtung gemessene Mass der Verstärkung 71 nimmt zur Aussenkontur hin zu. Die Verstärkungen 71 weisen je eine in Umfangrichtung weisende freie Fläche 72 auf, die in einer, im wesentlichen durch die Längserstreckung des Bohrwerkzeuges verlaufenden Ebene liegen. Der Winkel W zwischen den freien Flächen 72 und der Breitenerstreckung der Schneidplatte 7 beträgt 50°. Der Durchmesser A einer von den Verstärkungen gebildeten, nicht dargestellten Hüllkurve ist kleiner als die Breite B der Schneidplatte 7.

Die Verstärkungen 71 erstrecken sich über einen Teil der Länge L der Schneidplatte 7 und die Länge der Verstärkungen 71 nimmt mit zunehmender, in Umfangsrichtung gemessener Stärke S ab. Im Bereich der Verstärkungen 71 ist an den freien radialen Enden der Schneidplatten 7 jeweils eine parallel zur Längserstreckung des Bohrwerkzeuges verlaufende Vertiefung 73 angeordnet.

## Patentansprüche

1. Bohrwerkzeug für Bohr- und/oder Meisselgeräte insbesondere zum Bohren in Mauerwerk, Beton, Gestein und dgl. mit einem Einsteckende (1), einem Schaft (2) mit zwei wendelförmigen Abfuhmuten (5, 6), einem Bohrkopf (8) und einer am freien Ende des Bohrkopfes (8) eingesetzten Schneidplatte (7) die mit einer Schneidspitze (74) den Bohrkopf (8) bohrrichtungsseitig axial überragt und deren senkrecht zur Längserstreckung des Bohrwerkzeuges verlaufende Breite (B) grösser ist als der Durchmesser (D1) des Bohrkopfes (8), wobei die Abfuhmuten (5, 6) im Bereich des Bohrkopfes (8) im wesentlichen parallel zur Längserstreckung des Bohrwerkzeuges auslaufen, **dadurch gekennzeichnet, dass** die Schneidplatte (7) an den beiden radialen Endbereichen sich entgegen dem wendelförmigen Auslauf der Abfuhmuten (5, 6) erstreckende Verstärkungen (71) aufweist.

2. Bohrwerkzeug nach Anspruch 1, **dadurch gekennzeichnet, dass** sich die Verstärkungen (71) im wesentlichen über die halbe Breite (B) der Schneidplatte (7) erstrecken.

3. Bohrwerkzeug nach Anspruch 1 oder 2, **dadurch gekennzeichnet, dass** sich die Verstärkungen (71) wenigstens teilweise im wesentlichen über die gesamte Länge (L) der Schneidplatte (7) erstrecken.

4. Bohrwerkzeug nach Anspruch 3, **dadurch gekennzeichnet, dass** die Länge der Schneidplatte (7) im Bereich der Verstärkungen (71) mit zunehmender, in Umfangsrichtung gemessener Stärke (S) abnimmt.

5. Bohrwerkzeug nach einem der Ansprüche 1 bis 4, **dadurch gekennzeichnet, dass** das in Umfangsrichtung gemessene Mass der Verstärkung (71) zur Aussenkontur hin zunimmt.

6. Bohrwerkzeug nach Anspruch 5, **dadurch gekennzeichnet, dass** die in Umfangsrichtung weisende, freie Fläche (72) der Verstärkung (71) in einer Ebene verläuft, die im wesentlichen durch das Zentrum des Bohrwerkzeuges verläuft.

7. Bohrwerkzeug nach Anspruch 6, **dadurch gekennzeichnet, dass** der Winkel (W) zwischen der in Umfangsrichtung weisenden, freien Fläche (72) und der Breitenerstreckung der Schneidplatte (7) 20° bis 60° beträgt.

8. Bohrwerkzeug nach einem der Ansprüche 1 bis 7, **dadurch gekennzeichnet, dass** der Durchmesser der von den Verstärkungen (71) gebildeten Hüllkurve kleiner ist als die Breite (B) der Schneidplatte (7).

9. Bohrwerkzeug nach einem der Ansprüche 1 bis 8, **dadurch gekennzeichnet, dass** im Bereich der Verstärkungen (71) an den freien radialen Enden der Schneidplatte (7) eine parallel zur Längserstreckung des Bohrwerkzeuges verlaufende Vertiefung (73) angeordnet ist.

## Claims

1. Drill bit for drilling and/or chiselling tools, especially for the drilling of masonry, concrete, rock and the like, comprising a shank (1), a shaft (2) with two helical flutes (5, 6), a drill head (8) and a carbide tip (7) which is fixed at the free end of the drill head (8), a cutting point (74) of said carbide tip (7) projecting in axial direction beyond the end of the drill head (8) in direction of drilling, and the width (B) of the carbide tip (7), which extends perpendicular to the longitudinal extension of the drill bit, being greater than the diameter (D1) of the drill head (8), and the flutes (5, 6) terminating in the region of the drill head (8) in such a way as to extend substantially parallel to the longitudinal extension of the drill bit, **characterized in that**, in the region of its two radial ends, the carbide tip (7) has reinforcements (71) extending towards the helical termination of the flutes (5, 6).

2. Drill bit according to Claim 1, **characterized in that** the reinforcements (71) extend substantially over half the width (B) of the carbide tip (7).

3. Drill bit according to Claim 1 or 2, **characterized in that** the reinforcements (71) extend at least in part substantially over the entire length (L) of the carbide tip (7).

4. Drill bit according to Claim 3, **characterized in that** the length of the carbide tip (7) diminishes in the region of the reinforcements (71) with increasing thickness (S) measured in circumferential direction.

5. Drill bit according to one of Claims 1 to 4, **characterized in that** the dimension of the reinforcement (71) measured in circumferential direction increases towards the outer contour.

6. Drill bit according to Claim 5, **characterized in that** the free face (72) of the reinforcement (71) pointing in circumferential direction extends in a plane which runs substantially through the centre of the drill bit.

7. Drill bit according to Claim 6, **characterized in that** the angle (W) between the free face (72) pointing in circumferential direction and the extension of the width of the carbide tip (7) amounts to 20° to 60°.

8. Drill bit according to one of Claims 1 to 7, **characterized in that** the diameter of the envelope curve formed by the reinforcements (71) is smaller than the width (B) of the carbide tip (7).

9. Drill bit according to one of Claims 1 to 8, **characterized in that**, in the region of the reinforcements (71) at the free radial ends of the carbide tip (7), a recess (73) is provided which extends parallel to the longitudinal extension of the drill bit.

## Revendications

1. Foret pour outils de forage et/ou de burinage, en particulier pour le forage dans de la maçonnerie, du béton, de la roche et analogue, avec une extrémité insérable (1), une tige (2) avec deux gorges d'évacuation hélicoïdales (5, 6), une tête de forage (8) et, insérée à l'extrémité libre de la tête de forage (8), une plaquette de coupe (7) qui, avec une pointe de coupe (74), dépasse axialement de la tête de forage (8) côté direction de forage et dont la largeur (B) s'étendant perpendiculairement à l'extension longitudinale du foret est supérieure au diamètre (D1) de la tête de forage (8), les gorges d'évacuation (5, 6) se terminant dans la zone de la tête de forage (8) sensiblement parallèlement à l'extension longitudinale du foret, **caractérisé en ce que** la plaquette de coupe (7) comporte des renforts (71) s'étendant à l'opposé de la terminaison hélicoïdale des gorges d'évacuation (5, 6).

2. Foret selon la revendication 1, **caractérisé en ce que** les renforts (71) s'étendent sensiblement sur la moitié de la largeur (B) de la plaquette de coupe (7).

3. Foret selon la revendication 1 ou 2, **caractérisé en ce que** les renforts (71) s'étendent au moins en partie sensiblement sur toute la longueur (L) de la plaquette de coupe (7).

4. Foret selon la revendication 3, **caractérisé en ce que** la longueur de la plaquette de coupe (7) décroît dans la zone des renforts (71) à mesure que son épaisseur (S) mesurée dans la direction circonférentielle croît.

5. Foret selon une des revendications 1 à 4, **caractérisé en ce que** la dimension du renfort (71) mesurée dans la direction circonférentielle croît vers le contour extérieur.

6. Foret selon la revendication 5, **caractérisé en ce que** la face de dépouille (72) du renfort (71) tournée dans la direction circonférentielle s'étend dans un plan qui passe sensiblement par le centre du foret.

7. Foret selon la revendication 6, **caractérisé en ce que** l'angle (W) entre la face de dépouille (72) tournée dans la direction circonférentielle et l'extension en largeur de la plaquette de coupe (7) est de 20° à 60°.

8. Foret selon une des revendications 1 à 7, **caractérisé en ce que** le diamètre de l'enveloppante formée par les renforts (71) est inférieur à la largeur (B) de la plaquette de coupe (7).

9. Foret selon une des revendications 1 à 8, **caractérisé en ce qu'**un renfoncement (73) s'étendant parallèlement à l'extension longitudinale du foret est ménagé aux extrémités radiales libres de la plaquette de coupe (7) dans la zone des renforts (71).
